# EUROPEAN PATENT APPLICATION

(11) **EP 3 425 857 A1**
(43) Date of publication of application: **09.01.2019**
(21) Application number: 17819077.3
(22) Date of filing: 12.06.2017
(51) Int. Cl.: H04L 12/707

(54) **FORWARDING METHOD AND APPARATUS FOR FAST REROUTE, AND NETWORK DEVICE**

(30) Priority: 30.06.2016 CN 201610512546
(71) Applicant: ZTE Corporation, Shenzhen, Guangdong 518057 (CN)
(72) Inventor: LIN, Ning, Shenzhen Guangdong 518057 (CN)
(74) Representative: Novagraaf Technologies
(86) International application number: PCT/CN2017/087865
(87) International publication number: WO 2018/001080

(57) **Abstract**

A forwarding method and apparatus based on a Fast Reroute (FRR), and a network device are provided. The forwarding method includes that: a message for which FRR switching is to be performed is received; a tunnel identifier in the message is reset; and the message is switched to a tunnel egress, which is indicated by the tunnel identifier, for forwarding. The solution in the embodiments of the present disclosure solves a problem of low switching speed during FRR forwarding in the related art.

## Description

### Technical Field

The present disclosure relates to the field of communications, in particular to a forwarding method and apparatus based on a Fast Reroute (FRR), and a network device.

### Background

In a related art, FRR protection of a Virtual Private Network (VPN) mainly includes tunnel FRR protection and pseudo wire FRR protection. On a common chip, because a pseudo wire should be bound with a tunnel egress, both the pseudo wire and a tunnel have an attribute of egress. Therefore, if protection switching occurs on the tunnel, egress information of the tunnel will change, but the attribute of egress on the pseudo wire does not sense the change. Similarly, during switching on the pseudo wire, it is also needed to query whether the tunnel bound with the pseudo wire is active or standby, otherwise switching on the pseudo wire goes wrong. Meanwhile, the pseudo wire protection and the tunnel protection may exist simultaneously, so chips for services of the two kinds of protection cannot be set completely separately. If there are multiple services bound with the same tunnel FRR, it is necessary to allocate for the pseudo wire of each service a tunnel FRR configured aiming at the attribute of the pseudo wire. In this way, no matter the pseudo wire FRR is switched or the tunnel FRR is switched, forwarding may be performed correctly, but a problem caused by this way is that when the tunnel FRR is switched, it is needed to switch the tunnel FRRs carrying the attribute of pseudo wire and formed by each pseudo wire bound with the tunnel one by one, so the switching performance is determined by the number of pseudo wires bound with the tunnel.

However, because the requirement on the switching performance of a network is getting higher and higher, this way in general case that FRR switching of the pseudo wire and the FRR switching of the tunnel cannot be completely separated causes the switching performance to generate different effects with the difference of services; especially when the tunnel is switched, the switching performance is often determined by the number of pseudo wire services bound with the tunnel.

A method for a device to perform tunnel FRR switching in a related art includes the followings.
1. A service is configured on a pseudo wire, and the pseudo wire is bound with a tunnel. It is assumed that there are a plurality of services bound with a plurality of pseudo wires, and these pseudo wires are bound with the same tunnel.
2. A protection tunnel of an active tunnel is configured, that is, an FRR is formed for the tunnel. However, there are a plurality of services bound with the tunnel FRR, so there is one FRR item on a chip for each service.
3. When the active tunnel fails, FRR switching is performed to switch to a standby tunnel. At this time, the FRR items corresponding to all the services need to be switched one by one.

It can be seen from above that in the related art, because both the pseudo wire and the tunnel have the attribute of egress, when protection is formed for the tunnel, it is impossible to complete switching of all the pseudo wires by one item. In the logic processing of the chip, it is necessary to set a tunnel item aiming at each pseudo wire to forward a message correctly. However, in order to ensure correct processing, these items have to be switched one by one during tunnel switching, so a switching speed drops dramatically when there are a large number of services and pseudo wires.

At present, an effective solution has not been found aiming at the above problem in the related art.

### Summary

The embodiments of the present disclosure provide a forwarding method and apparatus based on an FRR and a network device, which may at least solve a problem of low switching speed during FRR forwarding in the related art.

According to an embodiment of the present disclosure, a forwarding method based on an FRR is provided, which includes that: a message for which FRR switching is to be performed is received; a tunnel identifier in the message is reset; and the message is switched to a tunnel egress, which is indicated by the tunnel identifier, for forwarding.

In an exemplary embodiment, before the message for which the FRR switching is to be performed is received, the forwarding method may further include that: a pseudo wire label is added to the message, and a first tunnel identifier of a tunnel bound with a pseudo wire is carried in the message, wherein the pseudo wire label corresponds to service information of the message.

In an exemplary embodiment, the act that the tunnel identifier in the message is reset may include that: the first tunnel identifier is extracted at a preset position; and the first tunnel identifier is reset to a second tunnel identifier of a standby tunnel according to an idle state of the tunnel.

In an exemplary embodiment, the act that the tunnel identifier in the message is reset may include that: a type of the FRR switching is determined; and when the FRR switching is pseudo wire FRR switching, the service information of the message is parsed, first label information of the pseudo wire bound with the service information is modified to second label information of a standby pseudo wire, and the first tunnel identifier of the tunnel bound with the pseudo wire is modified to a second tunnel identifier of a second tunnel bound with the standby pseudo wire; when the FRR switching is tunnel FRR switching, tunnel information of a preset initial tunnel is modified to tunnel information of a standby tunnel.

In an exemplary embodiment, the act that the message for which the FRR switching is to be performed is received may include that: an uplink message for which the FRR switching is to be performed is received; or, a downlink message for which the FRR switching is to be performed is received.

In an exemplary embodiment, the act that the message is switched to the tunnel egress, which is indicated by the tunnel identifier, for forwarding may include that: when the FRR switching is the pseudo wire FRR switching, querying is performed according to the second tunnel identifier to obtain a first tunnel egress; when the FRR switching is the tunnel FRR switching, querying is performed according to the tunnel identifier of the standby tunnel to obtain a second tunnel egress; and the message is forwarded on the first tunnel egress or the second tunnel egress.

In an exemplary embodiment, the act that the message is switched to the tunnel egress, which is indicated by the tunnel identifier, for forwarding may include that: the tunnel identifier is removed from the reset message to obtain the message carrying the pseudo wire label; querying is performed according to the service information of the message to obtain a service ingress corresponding to the pseudo wire label; and the message is forwarded on the service ingress.

In an exemplary embodiment, the tunnel information may include at least one of: egress information, Virtual Local Area Network (VLAN) information, and Media Access Control (MAC) information.

In an exemplary embodiment, the service information may include at least one of: an ingress port of the message and VLAN information of the message.

According to another embodiment of the present disclosure, a forwarding apparatus based on an FRR is provided, which includes: a receiving module, which is configured to receive the message for which the FRR switching is to be performed; a setting module, which is configured to reset the tunnel identifier in the message; and a forwarding module, which is configured to switch the message to the tunnel egress, which is indicated by the tunnel identifier, for forwarding.

In an exemplary embodiment, the forwarding apparatus may further include: a configuring module, which is configured to, before the receiving module receives the message for which the FRR switching is to be performed, add the pseudo wire label to the message, and carry the first tunnel identifier of the tunnel bound with the pseudo wire in the message, wherein the pseudo wire label corresponds to the service information of the message.

In an exemplary embodiment, the setting module includes: an extracting unit, which is configured to extract the first tunnel identifier at the preset position; and a setting unit, which is configured to reset the first tunnel identifier to the second tunnel identifier of the standby tunnel according to the idle state of the tunnel.

In an exemplary embodiment, the setting module may further include: a determining unit, which is configured to determine the type of the FRR switching; and a modifying unit, which is configured to, when the FRR switching is the pseudo wire FRR switching, parse the service information of the message, modify the first label information of the pseudo wire bound with the service information to the second label information of the standby pseudo wire, and modify the first tunnel identifier of the tunnel bound with the pseudo wire to a second tunnel identifier of the second tunnel bound with the standby pseudo wire, and when the FRR switching is the tunnel FRR switching, modify the tunnel information of the preset initial tunnel to tunnel information of a standby tunnel.

In an exemplary embodiment, the forwarding module includes: a first querying unit, which is configured to, when the FRR switching is the pseudo wire FRR switching, query according to the second tunnel identifier to obtain the first tunnel egress, and when the FRR switching is the tunnel FRR switching, query according to the tunnel identifier of the standby tunnel to obtain the second tunnel egress; and a first forwarding unit, which is configured to forward the message on the first tunnel egress or the second tunnel egress.

In an exemplary embodiment, the forwarding module includes: a processing unit, which is configured to remove the tunnel identifier from the reset message to obtain the message carrying the pseudo wire label; a second querying unit, which is configured to query according to the service information of the message to obtain the service ingress corresponding to the pseudo wire label; and a second forwarding unit, which is configured to forward the message on the service ingress.

In an exemplary embodiment, the tunnel information may include at least one of: the egress information, the VLAN information, and the MAC information.

In an exemplary embodiment, the service information may include at least one of: the ingress port of the message and VLAN information of the message.

According to yet another embodiment of the present disclosure, a network device is provided, which includes: a logic module for controlling and processing a pseudo wire service, which is configured to match the service information of the message for which the FRR switching is to be performed with the pseudo wire, add the pseudo wire label to the message, and set information of the tunnel identifier of the tunnel bound with the pseudo wire in the message to be sent to a logic module for controlling and processing a tunnel; and the logic module for controlling and processing a tunnel, which is configured to, after the message sent by the logic module for controlling and processing a pseudo wire service is received, extract the tunnel identifier, and forward the message according to information of the egress indicated by the tunnel identifier.

According to yet another embodiment of the present disclosure, another network device is provided, which includes: a Field Programmable Gate Array (FPGA) and a switch chip. The FPGA is configured to configure a corresponding relationship between the service information of the message and the pseudo wire, and set the pseudo wire label of the message and the tunnel information in the message according to the corresponding relationship; the switch chip is configured to replace preset initial tunnel information of the message with the tunnel information.

In an exemplary embodiment, the FPGA is further configured to remove the pseudo wire label according to the corresponding relationship, restore the message, and forward the message on a preset initial port.

In an exemplary embodiment, the switch chip is further configured to remove the tunnel information.

In an exemplary embodiment, the FPGA is integrated in the switch chip.

According to yet another embodiment of the present disclosure, a storage medium is provided. The storage medium is configured to store program codes used for performing the following acts:
the message for which the FRR switching is to be performed is received;
the tunnel identifier in the message is reset; and
the message is switched to the tunnel egress, which is indicated by the tunnel identifier, for forwarding.

Through some embodiments, the message for which the FRR switching is to be performed is received, the tunnel identifier in the message is reset, and the message is switched to the tunnel egress, which is indicated by the tunnel identifier, for forwarding. Because the tunnel identifier in the message is reset, one-time switching in which the pseudo wire and the tunnel are independent of each other may be completed, a problem of low switching speed during FRR forwarding in the related art may be solved, logic control over FRR protection switching of the VPN is simplified, and the performance of the network device is improved and a maintenance cost is saved.

### Brief Description of the Drawings

The accompanying drawings described here are used for providing a deeper understanding of the present disclosure, and constitute a part of the application; schematic embodiments of the present disclosure and description thereof are used for illustrating the present disclosure and not intended to form an improper limit to the present disclosure. In the accompanying drawings:
Fig. 1 is a flowchart of a forwarding method based on an FRR according to an embodiment of the present disclosure;
Fig. 2 is a structure diagram of a forwarding apparatus based on an FRR according to an embodiment of the present disclosure;
Fig. 3 is a structure diagram of a network device according to an embodiment of the present disclosure;
Fig. 4 is a structure diagram of another network device according to an embodiment of the present disclosure;
Fig. 5 is a schematic diagram of a working principle according to an embodiment of the present disclosure; and
Fig. 6 is a flowchart of the method according to an embodiment of the present disclosure.

### Detailed Description of the Embodiments

The present disclosure is elaborated below with reference to the accompanying drawings and embodiments. It is to be noted that the embodiments of the present disclosure and the characteristics in the embodiments can be combined under the condition of no conflicts.

It is to be noted that the terms like "first" and "second" in the specification, the claims and the accompanying drawings of the present disclosure are used for differentiating the similar objects, but do not have to describe a specific order or a sequence.

### First embodiment

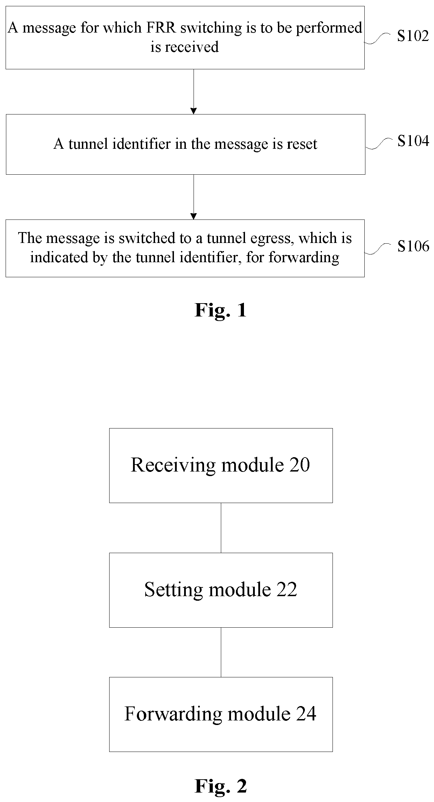

In the present embodiment, a forwarding method based on an FRR is provided. Fig. 1 is a flowchart of the forwarding method based on an FRR according to an embodiment of the present disclosure. As shown in Fig. 1, the flow includes the following acts S102 to S106.

At act S102, a message for which FRR switching is to be performed is received.

At act S104, a tunnel identifier in the message is reset.

At act S106, the message is switched to a tunnel egress, which is indicated by the tunnel identifier, for forwarding.

Through the above acts, the message for which the FRR switching is to be performed is received, the tunnel identifier in the message is reset, and the message is switched to the tunnel egress, which is indicated by the tunnel identifier, for forwarding. Because the tunnel identifier in the message is reset, one-time switching in which the pseudo wire and the tunnel are independent of each other may be completed, and a problem of low switching speed during FRR forwarding in the related art may be solved, thereby simplifying the logic control over the FRR protection switching of the VPN, and improving the performance of the network device and saving the maintenance cost.

In an exemplary embodiment, the subject of performing the above acts may be, but not limited to, a switch, a router or a gateway device in the product field of a Packet Transport Network (PTN).

In an exemplary embodiment, before the message for which the FRR switching is to be performed is received, the forwarding method may further include that: a pseudo wire label is added to the message, and a first tunnel identifier of a tunnel bound with a pseudo wire is carried in the message, wherein the pseudo wire label corresponds to service information of the message.

In an exemplary embodiment, the act that the tunnel identifier in the message is reset may include the following acts S11 and S12.

At act S11, the first tunnel identifier is extracted at a preset position.

At act S12, the first tunnel identifier is reset to a second tunnel identifier of a standby tunnel according to an idle state of the tunnel.

In an alternative implementation according to the present embodiment, the act that the tunnel identifier in the message is reset may further include the following acts S21 and S22.

At act S21, a type of the FRR switching is determined.

At act S22, when the FRR switching is pseudo wire FRR switching, the service information of the message is parsed, first label information of the pseudo wire bound with the service information is modified to second label information of a standby pseudo wire, and the first tunnel identifier of the tunnel bound with the pseudo wire is modified to a second tunnel identifier of a second tunnel bound with the standby pseudo wire; when the FRR switching is tunnel FRR switching, tunnel information of a preset initial tunnel is modified to tunnel information of a standby tunnel. Alternatively, the tunnel information is also a specific tunnel identifier which corresponds to the tunnel, and the preset initial tunnel is the tunnel corresponding to the first tunnel identifier.

In an exemplary embodiment, the message may be an uplink message or a downlink message. Correspondingly, the act that the message for which the FRR switching is to be performed is received may include that: the uplink message for which the FRR switching is to be performed is received; or, the downlink message for which the FRR switching is to be performed is received.

In an exemplary embodiment, the act that the message is switched to the tunnel egress, which is indicated by the tunnel identifier, for forwarding may include the following acts S31 to S32.

At act S31, when the FRR switching is the pseudo wire FRR switching, querying is performed according to the second tunnel identifier to obtain a first tunnel egress; and when the FRR switching is the tunnel FRR switching, querying is performed according to the tunnel identifier of the standby tunnel to obtain a second tunnel egress.

At act S32, the message is forwarded on the first tunnel egress or the second tunnel egress.

Furthermore, the act that the message is switched to the tunnel egress, which is indicated by the tunnel identifier, for forwarding may include the following acts S41 to S43.

At act S41, the tunnel identifier is removed from the reset message to obtain the message carrying the pseudo wire label.

At act S42, querying is performed according to the service information of the message to obtain a service ingress corresponding to the pseudo wire label.

At act S43, the message is forwarded on the service ingress.

In the present embodiment, the tunnel information may be, but not limited to: egress information, VLAN information, and MAC information. The service information may be, but not limited to: an ingress port of the message and VLAN information of the message.

Through the above description of implementations, those skilled in the art may clearly know that the forwarding method according to the above embodiment may be implemented by means of software plus a necessary common hardware platform, certainly by means of hardware; but in many cases, the former is the better implementation. Based on this understanding, the technical solutions of the present disclosure substantially or the part making a contribution to the prior art may be embodied in the form of software product; the computer software product is stored in a storage medium (e.g. ROM/RAM, a magnetic disk, and a compact disc) and includes a number of instructions to make a terminal device (which may be a mobile phone, a computer, a server or a network device, etc.) perform the forwarding method in each embodiment of the present disclosure.

### Second embodiment

In the present embodiment, a forwarding apparatus based on an FRR is provided. The forwarding apparatus is configured to implement the above embodiments and exemplary implementations, which will not be elaborated herein. The term "module" used below may realize a combination of software and/or hardware with an intended function. Although the device described in the following embodiment is realized through software better, the realization through hardware or a combination of software and hardware is possible and conceived.

Fig. 2 is a structure diagram of the forwarding apparatus based on an FRR according to an embodiment of the present disclosure. As shown in Fig. 2, the forwarding apparatus includes:
a receiving module 20, which is configured to receive the message for which the FRR switching is to be performed;
a setting module 22, which is configured to reset the tunnel identifier in the message; and
a forwarding module 24, which is configured to switch the message to the tunnel egress, which is indicated by the tunnel identifier, for forwarding.

In an exemplary embodiment, the forwarding apparatus shown in Fig. 2 may further include: a configuring module, which is configured to, before the receiving module receives the message for which the FRR switching is to be performed, add the pseudo wire label to the message, and carry the first tunnel identifier of the tunnel bound with the pseudo wire in the message, wherein the pseudo wire label corresponds to the service information of the message.

In an exemplary embodiment, the setting module shown in Fig. 2 includes: an extracting unit, which is configured to extract the first tunnel identifier at the preset position; and a setting unit, which is configured to reset the first tunnel identifier to the second tunnel identifier of the standby tunnel according to the idle state of the tunnel.

In an exemplary embodiment, the setting module shown in Fig. 2 may further include: a determining unit, which is configured to determine the type of the FRR switching; and a modifying unit, which is configured to, when the FRR switching is the pseudo wire FRR switching, parse the service information of the message, modify the first label information of the pseudo wire bound with the service information to the second label information of the standby pseudo wire, and modify the first tunnel identifier of the tunnel bound with the pseudo wire to a second tunnel identifier of a second tunnel bound with the standby pseudo wire, and when the FRR switching is the tunnel FRR switching, modify the tunnel information of the preset initial tunnel to tunnel information of a standby tunnel.

In an exemplary embodiment, the forwarding module shown in Fig. 2 includes: a first querying unit, which is configured to, when the FRR switching is the pseudo wire FRR switching, query according to the second tunnel identifier to obtain the first tunnel egress, and when the FRR switching is the tunnel FRR switching, query according to the tunnel identifier of the standby tunnel to obtain the second tunnel egress; and a first forwarding unit, which is configured to forward the message on the first tunnel egress or the second tunnel egress.

In an exemplary embodiment, the forwarding module shown in Fig. 2 includes: a processing unit, which is configured to remove the tunnel identifier from the reset message to obtain the message carrying the pseudo wire label; a second querying unit, which is configured to query according to the service information of the message to obtain the service ingress corresponding to the pseudo wire label; and a second forwarding unit, which is configured to forward the message on the service ingress.

In the present embodiment, the tunnel information may be, but not limited to: the egress information, the VLAN information, and the MAC information. The service information may be, but not limited to: an ingress port of the message and VLAN information of the message.

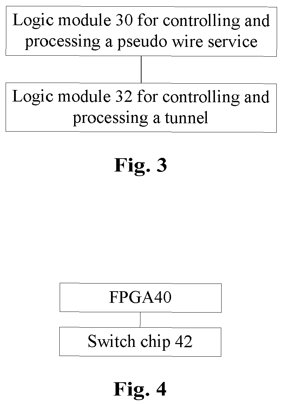

Fig. 3 is a structure diagram of a network device according to an embodiment of the present disclosure. As shown in Fig. 3, the network device includes:
a logic module for controlling and processing a pseudo wire service 30, which is configured to match the service information of the message for which the FRR switching is to be performed with the pseudo wire, add the pseudo wire label to the message, and set information of the tunnel identifier of the tunnel bound with the pseudo wire in the message to be sent to a logic module for controlling and processing a tunnel; and
the logic module for controlling and processing a tunnel 32, which is configured to, after the message sent by the logic module for controlling and processing a pseudo wire service is received, extract the tunnel identifier, and forward the message according to information of the egress indicated by the tunnel identifier.

Fig. 4 is a structure diagram of another network device according to an embodiment of the present disclosure. As shown in Fig. 4, the network device includes: an FPGA40 and a switch chip 42. The FPGA is configured to configure a corresponding relationship between the service information of the message and the pseudo wire, and set the pseudo wire label of the message and the tunnel information in the message according to the corresponding relationship; the switch chip is configured to replace preset initial tunnel information of the message with the tunnel information.

In an exemplary embodiment, the FPGA is further configured to remove the pseudo wire label according to the corresponding relationship, restore the message, and forward the message on a preset initial port.

In an exemplary embodiment, the switch chip is further configured to remove the tunnel information.

In an exemplary embodiment, the FPGA may be integrated in the switch chip.

It is to be noted that the above modules may be implemented by software or hardware; for the latter, the above modules may be implemented by, but not limited to, the following way: all the above modules are in the same processor; or, the above modules are in different processors in form of any combination.

### Third embodiment

The present embodiment is an exemplary embodiment in which the solution is described in detail in combination with scenarios.

The present embodiment describes a fast switching method for an FRR of the VPN. Using the fast switching method may implement fast one-time switching of FRR protection of the VPN no matter the FRR protection of the VPN is tunnel protection or pseudo wire protection or tunnel over pseudo wire protection, thereby greatly improving the performance of protection switching of the VPN of the device. Moreover, the fast switching method may be applied to the layer 2 VPN and the layer 3 VPN, that tunnel protection switching is no longer related to a VPN service may be implemented, and pseudo wire switching of the VPN service may also no longer consider whether the tunnel is in a protection state. Using the technology may greatly improve the performance of FRR protection switching of the VPN of the device, and reduce software management complexity of the FRR of the VPN.

The solution of the present embodiment enables a relationship between the pseudo wire and the tunnel to become easier for management, and may be a method for implementing one-time fast switching.

The present embodiment may use a prepositive logic module to preprocess information of the pseudo wire part, and then associate the tunnel information with the egress information to complete correct forwarding of the message. This way implements that the egress information is directly unbound from a service pseudo wire level, that is, forwarding logic of the service pseudo wire level can only see pseudo wire information and tunnel ID information, and does not concern specific tunnel information. However, all physical egress series information is put on the forwarding logic related to the tunnel, and the forwarding logic related to the tunnel no longer concerns all information of the service pseudo wire, so that complete decoupling of the pseudo wire information and the tunnel information is implemented. After the processing, separate switching of the pseudo wire FRR (that is, during the pseudo wire switching, there is no need to query whether the tunnel is in an active state or a standby state at present) and the one-time switching of the tunnel FRR (that is, during the tunnel switching, there is no need to perform switching one by one aiming at each pseudo wire, but it is possible to perform one-time switching to complete switching of all the services bound with the tunnel) may be completed.

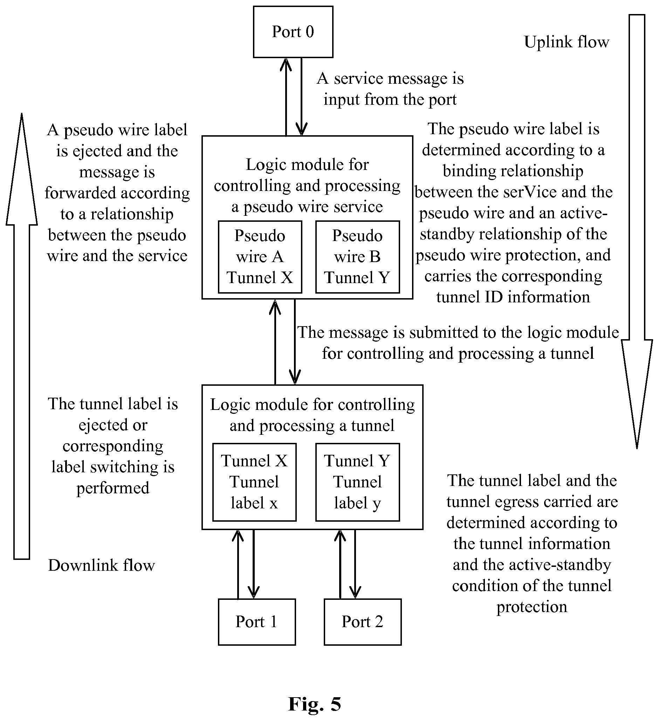

Fig. 5 is a schematic diagram of a working principle according to an embodiment of the present disclosure. An apparatus corresponding to the fast switching method for the FRR of the VPN includes: the logic module for controlling and processing a pseudo wire service, the logic module for controlling and processing a tunnel, and a tunnel port. It can be seen from Fig. 5 that through cooperative work between the logic module for controlling and processing a pseudo wire service and the logic module for controlling and processing a tunnel may independently complete encapsulation of the pseudo wire label, encapsulation of the tunnel label, active-standby switching of the pseudo wire FRR, and active-standby switching of the tunnel FRR, and they may have no coupling relationship.

The logic module for controlling and processing a pseudo wire service

The main function of the logic module for controlling and processing a pseudo wire service is to match the service with the pseudo wire, add the pseudo wire label to the message, carry the tunnel ID information configured on the pseudo wire in the message in a certain way which does not influence the service, and transmit the information to the follow-up logic module for controlling and processing a tunnel.

The logic module for controlling and processing a tunnel

After receiving the message output by the logic module for controlling and processing a pseudo wire service, the logic module for controlling and processing a tunnel extracts the tunnel ID information according to a position, which is agreed with the logic module for controlling and processing a pseudo wire service, of the tunnel ID information, adds the tunnel label of the message according to real information of the tunnel in the logic module for controlling and processing a tunnel, and forwards the message normally according to the egress information of the tunnel.

Through the combined processing of the two logic modules for controlling and processing, the pseudo wire FRR switching and the tunnel FRR switching become fast and convenient.

The pseudo wire FRR switching

If the pseudo wire FRR switching occurs, the pseudo wire FRR switching may be completed only by modifying the bound pseudo wire information of the service in the logic module for controlling and processing a pseudo wire service, modifying the label information of the pseudo wire to the label information of the standby pseudo wire, and directly modifying the tunnel ID to the tunnel ID information bound with the standby pseudo wire.

The tunnel FRR switching

If the tunnel FRR switching occurs, the tunnel FRR switching may be completed through the port only by modifying the egress information, the VLAN information and the MAC information related to the tunnel to the information of the new standby tunnel.

In this way, it is possible to only concern the tunnel ID but not the specific egress information of the tunnel during the pseudo wire FRR switching, so there is no need to query whether the present active and standby tunnels are effective during the pseudo wire FRR switching.

During the tunnel FRR switching, there is no need to concern which pseudo wire services pass through their own tunnel; it is because as long as the services carry the tunnel ID information, the services pass through the tunnel, and the information related to the pseudo wire of these services have been carried in the pseudo wire label of the message; so, during the tunnel switching, the information related to the pseudo wire is no longer concerned, and the one-time switching may be completed only by directly replacing the egress information, the VLAN information and the MAC information of the tunnel.

The solution of the present embodiment includes the followings.
1. Two relatively independent logic modules for controlling and processing are used to separately process the pseudo wire and the tunnel.
2. The logic module for controlling and processing a pseudo wire needs to transfer in the message the tunnel information bound with the pseudo wire to the logic module for controlling and processing a tunnel in an agreed way which does not influence service forwarding.
3. When the logic module for controlling and processing a tunnel performs the tunnel switching, there is no need to concern a service condition of the pseudo wire, and the one-time switching may be directly performed to complete switching of all the services on the tunnel; besides, there is no need to differentiate the service of the layer 2 VPN and the service of the layer 3 VPN, and all the services may be switched one time.
4. On downlink processing logic of the service, it is only needed to perform a reverse operation; the logic module for controlling and processing a tunnel removes the tunnel label information, transmits it to the logic module for controlling and processing a pseudo wire service, and completes downlink forwarding by using a corresponding forwarding relationship between information of the pseudo wire label and the service.

By such setting, pseudo wire logic and tunnel logic may be decoupled completely, so that the pseudo wire FRR switching and the tunnel FRR switching may be performed separately. Moreover, during the tunnel switching, there may be no need to differentiate the service of layer 2 VPN or the service of layer 3 VPN, and any service that is borne on the tunnel may be switched one time.

The technical solutions of the present disclosure include the following three solutions, corresponding to an uplink direction and a downlink direction respectively.

In solution 1, an FPGA may be set in the front of the switch chip, so that the FPGA may serve as a logic control block and the switch chip may serve as another logic control block.

For example, the FPGA is set to a pseudo wire control module, and the switch chip is set to a tunnel control module; the specific implement is as follows.

### Uplink direction

The configuration of setting the FPGA to a pseudo wire processing module is that: a relationship between the service of the FPGA and the pseudo wire is configured, so that after a service message enters the FPGA, a relationship between the service and the pseudo wire may be correspondingly configured in the FPGA according to the information of the service, such as the ingress and port plus the VLAN information of the service message, and the message has carried the information of the pseudo wire label and the tunnel ID information when sent from the FPGA.

In the switch chip, the tunnel label is replaced according to the tunnel ID information; it is possible to use a tunnel label switching principle and other configuration principles to achieve the effects of placing the tunnel label in the message and finding a true egress.

### Downlink direction

In the downlink direction, the switch chip removes a layer of the tunnel label, and forwards the message to the FPGA; and according to a condition of the service corresponding to the pseudo wire configured before, the FPGA removes the pseudo wire label, restores the service message, and forwards the message from a corresponding configuration port.

If the FPGA is set to the tunnel control module, and the switch chip serves as the pseudo wire control module, it is only needed to exchange setting information of the two modules.

In solution 2, the message may be transmitted to the switch chip twice by setting a loopback port in the switch chip, so as to respectively match different logic control items to complete pseudo wire logic control and tunnel logic control.

The specific implementation is as follows.

### Uplink direction

First, a relationship between service configuration of the chip and the pseudo wire and a tunnel ID label is configured, or a relationship between the pseudo wire label and source MAC address replacement information is configured; then, the egress of the message is directly set on the loopback port; in this way, according to the difference of services, the message is added with the pseudo wire label and the tunnel ID information (in the way of label or MAC address modification) after entering the switch chip for the first time, and then is sent to the loopback port.

Then, a relationship between the tunnel ID information and the tunnel egress of the message entering from the loopback port is configured, so that when the message carrying the tunnel ID information is input in the switch chip from the loopback port, the message is added with the tunnel label according to the information configuration between the tunnel ID information and real egress of the tunnel, and is sent from the real egress.

### Downlink direction

The message carrying the tunnel label and the pseudo wire label enters the switch chip; the switch chip first completes the processing of a tunnel label module by ejecting the tunnel label according to the tunnel information or swapping the tunnel label out for the tunnel ID label, and then sends the message to the loopback port.

The message enters the switch chip for the second time through loopback of the loopback port; the switch chip may eject the pseudo wire label according to the information of the pseudo wire label, and then forwards the message to a service port according to the corresponding relationship between the service and the pseudo wire.

In solution 3, two logic control units may be directly implemented in the switch chip, and the pseudo wire logic control and the tunnel logic control are completed inside the switch chip.

The specific implementation is as follows.

### Uplink direction

Information based on the pseudo wire and information based on the tunnel may be directly configured in the chip.

When the pseudo wire information is configured, it is only needed to concern the corresponding relationship between the service and the pseudo wire. After the message passes through the pseudo wire processing module, the encapsulation of the pseudo wire label and the processing of the tunnel ID information are completed directly.

When the tunnel information is configured, it is only needed to concern the corresponding relationship between the tunnel ID and the real egress of the tunnel. After the message passes through the tunnel processing module, the encapsulation of the tunnel information and finding and searching of the real port are completed directly.

### Downlink direction

After the message carrying the tunnel label and the pseudo wire label enters the switch chip, the tunnel module processes the tunnel information, completes ejection or processing of the tunnel label, and transmits the message to a pseudo wire module.

The pseudo wire module completes the ejection of the pseudo wire label, finds a related service egress according to the pseudo wire information of the message, and sends the message.

The acts of the technical solutions are illustrated below by four specific examples.

In each example, the service ingress is the port 0; the service is bound with the pseudo wire A whose pseudo wire label is a, and bound with the tunnel X whose tunnel label is x; the egress is the port 1; there is another standby pseudo wire B whose pseudo wire label is b; the pseudo wire B is bound with the tunnel Y whose tunnel label is y, and the egress is the port 2.

First example: uplink and downlink forwarding flows in which the service is bound with the pseudo wire A

Uplink of the service message includes the followings.
1. The label a on the pseudo wire A is pressed in an mpls header of a service flow message through the pseudo wire logic module.
2. The pseudo wire module presses the ID X of the tunnel X bound with the pseudo wire A in a position, which does not influence service forwarding, of the message (for example, the ID is pressed in the tunnel label of the mpls header and transmitted by taking an ID value as a label value; or the ID is presses in a source MAC address, because the source MAC address will be replaced after forwarded through the tunnel), and transmits the message to the tunnel module.
3. After receiving the message from the pseudo wire module, the tunnel module writes the real label information x of the tunnel in the mpls header according its tunnel information X, and transmits, according to the egress information of the tunnel X, the message to the port 1 to be sent.

Downlink of the service message includes the followings.
1. The tunnel module receives the message with the tunnel label x and the pseudo wire label a, performs corresponding processing (which may be either label switching, namely swapping the label x out for the tunnel ID label X, or label ejection, namely directly discarding the tunnel label x) to the mpls header of the message according to an action of the tunnel label x, and transmits the message to the pseudo wire module.
2. The pseudo wire module finds a relationship between the pseudo wire X and the service according to the pseudo wire label x, finds that the service egress is the port 0, and sends the message from the port 0.

Second example: a flow that the pseudo wire A and the pseudo wire B form pseudo wire FRR protection switching
1. The flow of forwarding the service and the message of the pseudo wire A is as shown in the first example.
2. When the pseudo wire A fails, and it is needed to switch to the pseudo wire B, the corresponding relationship between the service and the pseudo wire is directly modified in the pseudo wire module, and the service is directly bound with the pseudo wire B.
3. Uplink and downlink message forwarding flows will be correspondingly modified according to data of the pseudo wire B. Forwarding principles are as shown in the first example, but the pseudo wire label is replaced with b, the tunnel label is replaced with y, and the service egress is replaced with the port 2.

Third example: a flow that the tunnel X and the tunnel Y form tunnel FRR protection switching
1. The flow of forwarding the service and the message of the pseudo wire A is as shown in the first example.
2. The tunnel X and the tunnel Y form the tunnel FRR protection. When receiving the message transmitted from the pseudo wire module, the tunnel module queries the tunnel egress according to the information of the tunnel X. If tunnel switching happens now, the egress of the tunnel X directly points to the egress of the tunnel Y, that is, the service message carrying the information of the tunnel X is made directly point to the egress of the tunnel Y, and is sent from the port 2 carrying the tunnel label y.
3. The downlink flow is processed according to the first example. The tunnel y label is ejected, or the tunnel y label is swapped out for the tunnel X label (because the tunnel Y is the protection tunnel of the tunnel X) to be submitted to the pseudo wire module; the processing of the pseudo wire module is consistent with that in the first example.

Fourth example: a superimposed protection switching flow in which the pseudo wire A and the pseudo wire B form the pseudo wire FRR, and the tunnel X and the tunnel Y form the tunnel FRR
1. In the superimposed protection switching flow, the actual forwarding way is consistent with that in the first example.
2. When the pseudo wire is switched, forwarding is performed according to the way in the second example.
3. When the tunnel is switched, forwarding is performed according to the way in the third example.
4. The switching of the pseudo wire and the switching of the tunnel are independent of each other, and do not influence each other.

It can be seen from above technical solutions that compared with the general switching method for FRR of the VPN of the device, by using this way in which switching is respectively performed aiming at the pseudo wire and the tunnel by virtue of two logic processing modules, switching logic of the pseudo wire and switching logic of the tunnel are independent of each other and have no direct correlation, the independent one-time switching of the pseudo wire and the tunnel may be completed only by adding in the message an identifier carrying the tunnel ID information, and there is no longer a problem of forming different tunnel protection groups aiming at the pseudo wires to switch the pseudo wires one by one. Moreover, because the services are no longer differentiated, the switching of the layer 2 VPN and the switching of the layer 3 VPN may be completed only by one-time switching during the tunnel switching. So, the switching speed is improved greatly, the logic control over the FRR protection switching of the VPN is simplified, and the performance of the network device is improved greatly and the maintenance cost is saved.

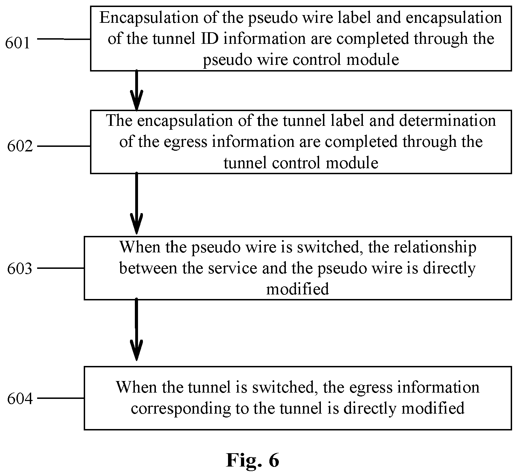

Fig. 6 is a flowchart of the method according to an embodiment of the present disclosure. As shown in Fig. 6, the flow includes the following acts S601 to S604.

At act S601, the encapsulation of the pseudo wire label and the encapsulation of the tunnel ID information are completed through the pseudo wire control module.

At act S602, the encapsulation of the tunnel label and determination of the egress information are completed through the tunnel control module.

At act S603, when the pseudo wire is switched, the relationship between the service and the pseudo wire is directly modified.

At act S604, when the tunnel is switched, the egress information corresponding to the tunnel is directly modified.

### Fourth embodiment

The embodiment of the present disclosure also provides a storage medium. In an exemplary embodiment, in the present embodiment, the storage medium may be configured to store program codes used for performing the following acts S1 to S3.

At act S1, the message for which the FRR switching is to be performed is received.

At act S2, the tunnel identifier in the message is reset.

At act S3, the message is switched to the tunnel egress, which is indicated by the tunnel identifier, for forwarding.

In an exemplary embodiment, in the present embodiment, the storage media may include, but is not limited to, a USB flash disk, a Read-Only Memory (ROM), a Random Access Memory (RAM), a mobile hard disk, a magnetic disk or a compact disc, and other media which can store the program codes.

In an exemplary embodiment, in the present embodiment, the processor performs, according to the program codes stored in the storage media, the act that the message for which the FRR switching is to be performed is received.

In an exemplary embodiment, the processor performs, according to the program codes stored in the storage media, the act that the tunnel identifier in the message is reset.

In an exemplary embodiment, the processor performs, according to the program codes stored in the storage media, the act that the message is switched to the tunnel egress, which is indicated by the tunnel identifier, for forwarding.

In an exemplary embodiment, the specific examples in the embodiment may refer to the examples described in the above embodiments and alternative implementations, and will not be repeated here.

Obviously, those skilled in the art should appreciate that the above modules and acts of the present disclosure can be implemented by a general-purpose computing device, and they can be centralized in a single computing device or distributed on a network composed of multiple computing devices; alternatively, they can be implemented by a program code which is capable of being executed by the computing device, so that they can be stored in a storage device and executed by the computing device; and in some situations, the presented or described acts can be executed in an order different from that described here; or they are made into integrated circuit modules, respectively; or multiple modules and acts of them are made into a single integrated circuit module to realize. In this way, the present disclosure is not limited to any particular combination of hardware and software.

The above is only the exemplary embodiment of the present disclosure and not intended to limit the present disclosure; for those skilled in the art, the present disclosure may have various modifications and changes. Any modifications, equivalent replacements, improvements and the like within the principle of the present disclosure should fall within the scope of the claims of the present disclosure.

### Industrial Applicability

As mentioned above, the forwarding method and apparatus based on the FRR, and the network device provided by some embodiments of the present disclosure have the following effects: because the tunnel identifier in the message is reset, the one-time switching in which the pseudo wire and the tunnel are independent of each other may be completed, a problem of low switching speed during FRR forwarding in the related art may be solved, the logic control over the FRR protection switching of the VPN is simplified, and the performance of the network device is improved and the maintenance cost is saved.

## Claims

1. A forwarding method based on a Fast Reroute, FRR, comprising:
receiving a message for which FRR switching is to be performed;
resetting a tunnel identifier in the message; and
switching the message to a tunnel egress, which is indicated by the tunnel identifier, for forwarding.

2. The forwarding method as claimed in claim 1, wherein before receiving the message for which the FRR switching is to be performed, the forwarding method further comprises:
adding a pseudo wire label to the message, and carrying a first tunnel identifier of a tunnel bound with a pseudo wire in the message, wherein the pseudo wire label corresponds to service information of the message.

3. The forwarding method as claimed in claim 2, wherein resetting the tunnel identifier in the message comprises:
extracting the first tunnel identifier at a preset position; and
resetting the first tunnel identifier to a second tunnel identifier of a standby tunnel according to an idle state of the tunnel.

4. The forwarding method as claimed in claim 2, wherein resetting the tunnel identifier in the message comprises:
determining a type of the FRR switching; and
when the FRR switching is pseudo wire FRR switching, parsing the service information of the message, modifying first label information of the pseudo wire bound with the service information to second label information of a standby pseudo wire, and modifying the first tunnel identifier of the tunnel bound with the pseudo wire to a second tunnel identifier of a second tunnel bound with the standby pseudo wire; when the FRR switching is tunnel FRR switching, modifying tunnel information of a preset initial tunnel to tunnel information of a standby tunnel.

5. The forwarding method as claimed in claim 1, wherein receiving the message for which the FRR switching is to be performed comprises:
receiving an uplink message for which the FRR switching is to be performed; or
receiving a downlink message for which the FRR switching is to be performed.

6. The forwarding method as claimed in claim 4, wherein switching the message to the tunnel egress, which is indicated by the tunnel identifier, for forwarding comprises:
when the FRR switching is the pseudo wire FRR switching, querying according to the second tunnel identifier to obtain a first tunnel egress; when the FRR switching is the tunnel FRR switching, querying according to the tunnel identifier of the standby tunnel to obtain a second tunnel egress; and
forwarding the message on the first tunnel egress or the second tunnel egress.

7. The forwarding method as claimed in claim 4, wherein switching the message to the tunnel egress, which is indicated by the tunnel identifier, for forwarding comprises:
removing the tunnel identifier from the reset message to obtain the message carrying the pseudo wire label;
querying according to the service information of the message to obtain a service ingress corresponding to the pseudo wire label; and
forwarding the message on the service ingress.

8. The forwarding method as claimed in claim 4, wherein the tunnel information comprises at least one of: egress information, Virtual Local Area Network, VLAN, information, and Media Access Control, MAC, information.

9. The forwarding method as claimed in claim 4, wherein the service information comprises at least one of: ingress port of the message and VLAN information of the message.

10. A forwarding apparatus based on a Fast Reroute, FRR, comprising:
a receiving module, which is configured to receive a message for which FRR switching is to be performed;
a setting module, which is configured to reset a tunnel identifier in the message; and
a forwarding module, which is configured to switch the message to a tunnel egress, which is indicated by the tunnel identifier, for forwarding.

11. The forwarding apparatus as claimed in claim 10, further comprising:
a configuring module, which is configured to, before the receiving module receives the message for which the FRR switching is to be performed, add a pseudo wire label to the message, and carry a first tunnel identifier of a tunnel bound with a pseudo wire in the message, wherein the pseudo wire label corresponds to service information of the message.

12. The forwarding apparatus as claimed in claim 11, wherein the setting module comprises:
an extracting unit, which is configured to extract the first tunnel identifier at a preset position; and
a setting unit, which is configured to reset the first tunnel identifier to a second tunnel identifier of a standby tunnel according to an idle state of the tunnel.

13. The forwarding apparatus as claimed in claim 11, wherein the setting module further comprises:
a determining unit, which is configured to determine a type of the FRR switching; and
a modifying unit, which is configured to, when the FRR switching is pseudo wire FRR switching, parse the service information of the message, modify first label information of the pseudo wire bound with the service information to second label information of a standby pseudo wire, and modify the first tunnel identifier of the tunnel bound with the pseudo wire to a second tunnel identifier of a second tunnel bound with the standby pseudo wire, and when the FRR switching is tunnel FRR switching, modify tunnel information of a preset initial tunnel to tunnel information of a standby tunnel.

14. The forwarding apparatus as claimed in claim 13, wherein the forwarding module comprises:
a first querying unit, which is configured to, when the FRR switching is the pseudo wire FRR switching, query according to the second tunnel identifier to obtain a first tunnel egress, and when the FRR switching is the tunnel FRR switching, query according to the tunnel identifier of the standby tunnel to obtain a second tunnel egress; and
a first forwarding unit, which is configured to forward the message on the first tunnel egress or the second tunnel egress.

15. The forwarding apparatus as claimed in claim 13, wherein the forwarding module comprises:
a processing unit, which is configured to remove the tunnel identifier from the reset message to obtain the message carrying the pseudo wire label;
a second querying unit, which is configured to query according to the service information of the message to obtain a service ingress corresponding to the pseudo wire label; and
a second forwarding unit, which is configured to forward the message on the service ingress.

16. The forwarding apparatus as claimed in claim 13, wherein the tunnel information comprises at least one of: egress information, Virtual Local Area Network, VLAN, information, and Media Access Control, MAC, information.

17. The forwarding apparatus as claimed in claim 13, wherein the service information comprises at least one of: ingress port of the message and VLAN information of the message.

18. A network device, comprising:
a logic module for controlling and processing a pseudo wire service, which is configured to match service information of a message for which Fast Reroute, FRR, switching is to be performed with a pseudo wire, add a pseudo wire label to the message, and set information of a tunnel identifier of a tunnel bound with the pseudo wire in the message to be sent to a logic module for controlling and processing a tunnel; and
the logic module for controlling and processing a tunnel, which is configured to, after the message sent by the logic module for controlling and processing a pseudo wire service is received, extract the tunnel identifier, and forward the message according to information of an egress indicated by the tunnel identifier.

19. A network device, comprising: a Field Programmable Gate Array, FPGA, and a switch chip;
the FPGA is configured to configure a corresponding relationship between service information of a message and a pseudo wire, and set a pseudo wire label of the message and tunnel information in the message according to the corresponding relationship;
the switch chip is configured to replace preset initial tunnel information of the message with the tunnel information.

20. The network device as claimed in claim 19, wherein the FPGA is further configured to remove the pseudo wire label according to the corresponding relationship, restore the message, and forward the message on a preset initial port.

21. The network device as claimed in claim 19, wherein the switch chip is further configured to remove the tunnel information.

22. The network device as claimed in claim 19, wherein the FPGA is integrated in the switch chip.
